# EUROPEAN PATENT SPECIFICATION

(11) **EP 1 932 385 B1**
(45) Date of publication and mention of the grant of the patent: **01.05.2013**
(21) Application number: 06799827.8
(22) Date of filing: 03.10.2006
(51) Int. Cl.: H04W 12/08, H04W 24/02

(54) **ACCESS CONTROL IN RADIO ACCESS NETWORK HAVING PICO BASE STATIONS**
ZUGANGSSTEUERUNG IN EINEM FUNKZUGANGSNETZ MIT PIKO-BASISSTATIONEN
COMMANDE D'ACCES DANS UN RESEAU D'ACCES RADIO COMPORTANT DES STATIONS DE BASE DE PICO-RESEAU

(30) Priority: 04.10.2005 US 722982 P; 04.10.2005 US 722983 P; 04.10.2005 US 722984 P; 06.10.2005 US 723946 P; 21.10.2005 US 728780 P; 31.10.2005 US 731495 P
(43) Date of publication of application: 18.06.2008
(73) Proprietor: Telefonaktiebolaget L M Ericsson (publ), 164 83 Stockholm (SE)
(72) Inventor: NYLANDER, Tomas, S-139 34 Värmdö (SE); VIKBERG, Jari, S-153 38 Järna (SE); TEDER, Paul, S-Täby 187 46 (SE)
(74) Representative: HOFFMANN EITLE
(86) International application number: PCT/SE2006/050367
(87) International publication number: WO 2007/040449

(56) References cited:
- WO-A1-99/41932
- WO-A2-2005/065214
- WO-A2-2005/065214
- US-B1- 6 532 361
- US-B1- 6 615 035
- US-B1- 6 993 359

## Description

### I. TECHNICAL FIELD

This invention pertains to wireless telecommunications, and particularly to access control in a radio access network having pico or "femto" radio base stations.

### II. RELATED ART AND OTHER CONSIDERATIONS

In a typical cellular radio system, wireless user equipment units (UEs) communicate via a radio access network (RAN) to one or more core networks. The user equipment units (UEs) can be mobile stations such as mobile telephones ("cellular" telephones) and laptops with mobile termination, and thus can be, for example, portable, pocket, hand-held, computer-included, or car-mounted mobile devices which communicate voice and/or data with radio access network. Alternatively, the wireless user equipment units can be fixed wireless devices, e.g., fixed cellular devices/terminals which are part of a wireless local loop or the like.

The radio access network (RAN) covers a geographical area which is divided into cell areas, with each cell area being served by a base station. A cell is a geographical area where radio coverage is provided by the radio base station equipment at a base station site. Each cell is identified by a unique identity, which is broadcast in the cell. The base stations communicate over the air interface with the user equipment units (UE) within range of the base stations. In the radio access network, several base stations are typically connected (e.g., by landlines or microwave) to a radio network controller (RNC). The radio network controller, also sometimes termed a base station controller (BSC), supervises and coordinates various activities of the plural base stations connected thereto. The radio network controllers are typically connected to one or more core networks. The core network has two service domains, with an RNC having an interface to both of these domains.

One example of a radio access network is the Universal Mobile Telecommunications (UMTS) Terrestrial Radio Access Network (UTRAN). The UMTS is a third generation system which in some respects builds upon the radio access technology known as Global System for Mobile communications (GSM) developed in Europe. UTRAN is essentially a radio access network providing wideband code division multiple access (WCDMA) to user equipment units (UEs). The Third Generation Partnership Project (3GPP) has undertaken to evolve further the UTRAN and GSM-based radio access network technologies.

As those skilled in the art appreciate, in WCDMA technology a common frequency band allows simultaneous communication between a user equipment unit (UE) and plural base stations. Signals occupying the common frequency band are discriminated at the receiving station through spread spectrum CDMA waveform properties based on the use of a high speed, pseudo-noise (PN) code. These high speed PN codes are used to modulate signals transmitted from the base stations and the user equipment units (UEs). Transmitter stations using different PN codes (or a PN code offset in time) produce signals that can be separately demodulated at a receiving station. The high speed PN modulation also allows the receiving station to advantageously generate a received signal from a single transmitting station by combining several distinct propagation paths of the transmitted signal. In CDMA, therefore, a user equipment unit (UE) need not switch frequency when handover of a connection is made from one cell to another. As a result, a destination cell can support a connection to a user equipment unit (UE) at the same time the origination cell continues to service the connection. Since the user equipment unit (UE) is always communicating through at least one cell during handover, there is no disruption to the call. Hence, the term "soft handover." In contrast to hard handover, soft handover is a "make-before-break" switching operation.

Other types of telecommunications systems which encompass radio access networks include the following: Global System for Mobile communications (GSM); Advance Mobile Phone Service (AMPS) system; the Narrowband AMPS system (NAMPS); the Total Access Communications System (TACS); the Personal Digital Cellular (PDC) system; the United States Digital Cellular (USDC) system; and the code division multiple access (CDMA) system described in EIA/TIA IS-95.

There are several interfaces of interest in the UTRAN. The interface between the radio network controllers (RNCs) and the core network(s) is termed the "Iu" interface. The interface between a radio network controller (RNC) and its base stations (BSs) is termed the "Iub" interface. The interface between the user equipment unit (UE) and the base stations is known as the "air interface" or the "radio interface" or "Uu interface". In some instances, a connection involves both a Source and Serving RNC (SRNC) and a target or drift RNC (DRNC), with the SRNC controlling the connection but with one or more diversity legs of the connection being handled by the DRNC. An Inter-RNC transport link can be utilized for the transport of control and data signals between Source RNC and a Drift or Target RNC, and can be either a direct link or a logical link. An interface between radio network controllers (e.g., between a Serving RNC [SRNC] and a Drift RNC [DRNC]) is termed the "Iur" interface.

The radio network controller (RNC) controls the UTRAN. In fulfilling its control role, the RNC manages resources of the UTRAN. Such resources managed by the RNC include (among others) the downlink (DL) power transmitted by the base stations; the uplink (UL) interference perceived by the base stations; and the hardware situated at the base stations.

Those skilled in the art appreciate that, with respect to a certain RAN-UE connection, an RNC can either have the role of a serving RNC (SRNC) or the role of a drift RNC (DRNC). If an RNC is a serving RNC (SRNC), the RNC is in charge of the connection with the user equipment unit (UE), e.g., it has full control of the connection within the radio access network (RAN). A serving RNC (SRNC) is connected to the core network. On the other hand, if an RNC is a drift RNC (DRNC), it supports the serving RNC (SRNC) by supplying radio resources (within the cells controlled by the drift RNC (DRNC)) needed for a connection with the user equipment unit (UE). A system which includes the drift radio network controller (DRNC) and the base stations controlled over the Iub Interface by the drift radio network controller (DRNC) is herein referenced as a DRNC subsystem or DRNS. An RNC is said to be the Controlling RNC (CRNC) for the base stations connected to it by an Iub interface. This CRNC role is not UE specific. The CRNC is, among other things, responsible for handling radio resource management for the cells in the base stations connected to it by the Iub interface.

Some operators are investigating the possibility of providing home or small area WCDMA coverage for limited number of users using a small radio base station ("RBS"), also called a "Femto RBS" and/or a "Home RBS" and/or "pico RBS" and/or "micro RBS" in some contexts. According to such investigation, the small RBS would provide normal WCDMA coverage for the end users (e.g., to a user equipment unit (UE)), and would be connected to the RNC using some kind of IP based transmission. The coverage area so provided is called a "femto cell" (to indicate that the coverage area is relatively small). Other terminology for a femto cell includes "pico cell" or "micro cell", which is in contrast to a macro cell covered by a macro or standard radio base station (RBS).

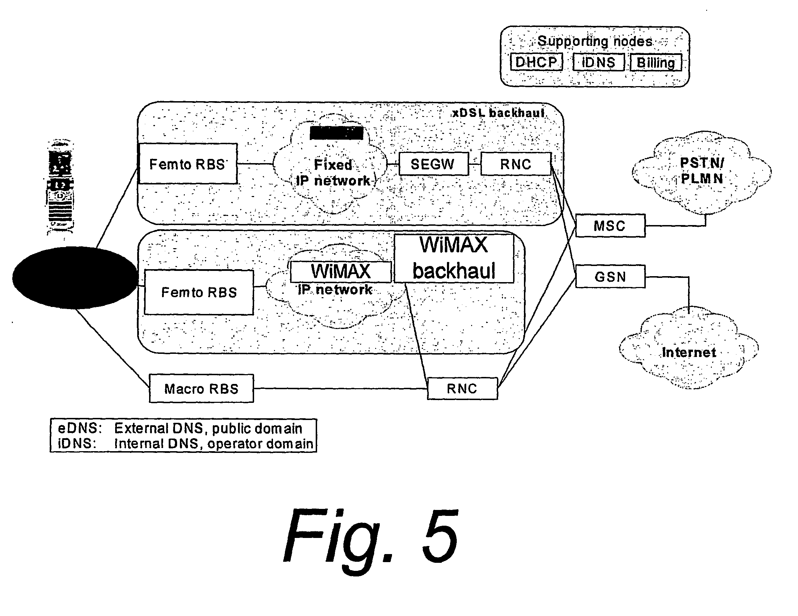

One alternative for the IP based transmission is to use Fixed Broadband access (like xDSL, Cable etc.) to connect the home RBS to the RNC. Another alternative would be to use Wireless Broadband access (e.g. HSDPA and Enhanced Uplink; or WiMAX). Fig. 5 illustrates the two different backhaul alternatives in more detail. The first alternative is labeled "xDSL Backhaul" and the second alternative is labeled "WiMAX Backhaul".

In general, ordinary WCDMA base stations (macro RBS) are able to connect to an RNC using IP-based transmission. Operator personnel, e.g., employees of an operator company which owns or maintains the macro RBS nodes and RNC nodes of the radio access network (RAN), typically install the macro RBS nodes. As part of the installation, the macro RBS is manually configured with IP addressing information (DNS name, Fully Qualified Domain Name, FQDN, or IP-address) of the RNC to which the macro RNC is to connect.

By contrast, a femto RBS is typically installed by the end user rather than the network operator. The end users are also able to move the Femto RBS geographically from place to place without the operator being able or willing to control relocation of the femto RBS. Such user-directed relocation requires that, wherever the Femto RBS is installed or located, it should connect to the correct RNC. A "correct RNC" or "preferred RNC" in this sense would be the same RNC that is controlling the overlaying macro cell of the radio access network (RAN).

When the femto RBS is used to enhance local coverage for example in a small or home office (SOHO) environment, it should be dedicated to the home or enterprise since the transmission towards the radio network controller node (and mobile core network) may be using transmission provided and paid by the home or enterprise itself. In such case the only terminals belonging to the SOHO or enterprise should be allowed to access the femto radio base stations.

In some situations the end user or SOHO purchases and possibly operates the femto radio base station. In some instances the femto radio base station may be a type of base stations that can only serve a limited number of end users. So it is very important that the end user or SOHO that has purchased the Femto RBS have access and not be denied access in view of the femto radio base station being preoccupied serving with unauthorized users.

As understood from the two foregoing scenarios of utilization of a femto radio base station, access control is important for gaining end-user acceptance for the femto radio base station concept.

UE access control for femto radio base stations is sorely lacking. There are two current mechanisms that have the illusion of potential access control or are seen as related to access control. These mechanisms, Access Control Class and Location Update (or Routing Area Update), are either provided in the UTRAN or between a mobile station and a Core Network (CN. Each of these mechanisms are discussed briefly below.

The radio access network mechanisms are based on the Access Control Class concept. At subscription, one or more Access Control Classes are allocated to the subscriber and stored in the USIM of the subscriber's user equipment unit (UE). These Access Control Classes can be used to prevent selected classes of users from sending initial access messages, mostly for load control reasons. Unfortunately, the Access Control Class concept in UTRAN cannot be used for fine-grained Access Control. One reason for the deficiency is related to the fact that only ten different Access Control Classes are available for normal end-users. With such a limited number of Access Control Classes, it is impossible to build any logic for access control for the femto radio base station concept.

The mechanisms between the mobile station (e.g., mobile terminal or user equipment unit (UE)) and the core network are based on Location Update control. This means that when the mobile station performs a Location Update towards the core network, the core network can reject the Location Update based on e.g. the location of the mobile station. Although the core network can reject a Location Update, a problem exists in the fact that the level of rejection can be only done on Location Area (LAI) or PLMN levels. The core network is not even aware of the Cell Identifier allocated for each femto radio base station.

What is needed, therefore, and an object herein provided, are method, technique, apparatus, and systems for providing effective access control to a femto radio base station in a radio access network.

WO-A2-2005/065214 discloses a private base station (PBS) configured to connect to the Internet and establish a small area of wireless coverage and includes an exclusivity database allowing registered mobile phones to use services within the cell and not allowing use of the services by unregistered mobile phones.

### BRIEF SUMMARY

The present invention provides a method of operating a radio access network according to Claim 1.

Furthermore, the present invention provides a radio access network according to Claim 8.

### BRIEF DESCRIPTION OF THE DRAWINGS

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.
Fig. 1A - Fig. 1E are diagrammatic views of an example embodiment of a telecommunications system including a radio access network, showing different stages of an access control operation with respect to a femto radio base station.
Fig. 2 is a schematic view of an example embodiment of a femto radio base station.
Fig. 3 is a schematic view of an example radio network control (RNC) node.
Fig. 4 is a diagrammatic view of an example structure of an access control database for femto radio base stations.
Fig. 5 is a diagrammatic view showing two different backhaul alternatives.
Fig. 6 is a diagrammatic view of an example embodiment of a status message returned by a radio network controller node after consultation with a femto access control database.

### DETAILED DESCRIPTION

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. That is, those skilled in the art will be able to devise various arrangements which, although not explicitly described or shown herein, embody the principles of the invention and are included within its spirit and scope. In some instances, detailed descriptions of well-known devices, circuits, and methods are omitted so as not to obscure the description of the present invention with unnecessary detail. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that block diagrams herein can represent conceptual views of illustrative circuitry embodying the principles of the technology. Similarly, it will be appreciated that any flow charts, state transition diagrams, pseudocode, and the like represent various processes which may be substantially represented in computer readable medium and so executed by a computer or processor, whether or not such computer or processor is explicitly shown.

The functions of the various elements including functional blocks labeled as "processors" or "controllers" may be provided through the use of dedicated hardware as well as hardware capable of executing software in association with appropriate software. When provided by a processor, the functions may be provided by a single dedicated processor, by a single shared processor, or by a plurality of individual processors, some of which may be shared or distributed. Moreover, explicit use of the term "processor" or "controller" should not be construed to refer exclusively to hardware capable of executing software, and may include, without limitation, digital signal processor (DSP) hardware, read only memory (ROM) for storing software, random access memory (RAM), and non-volatile storage.

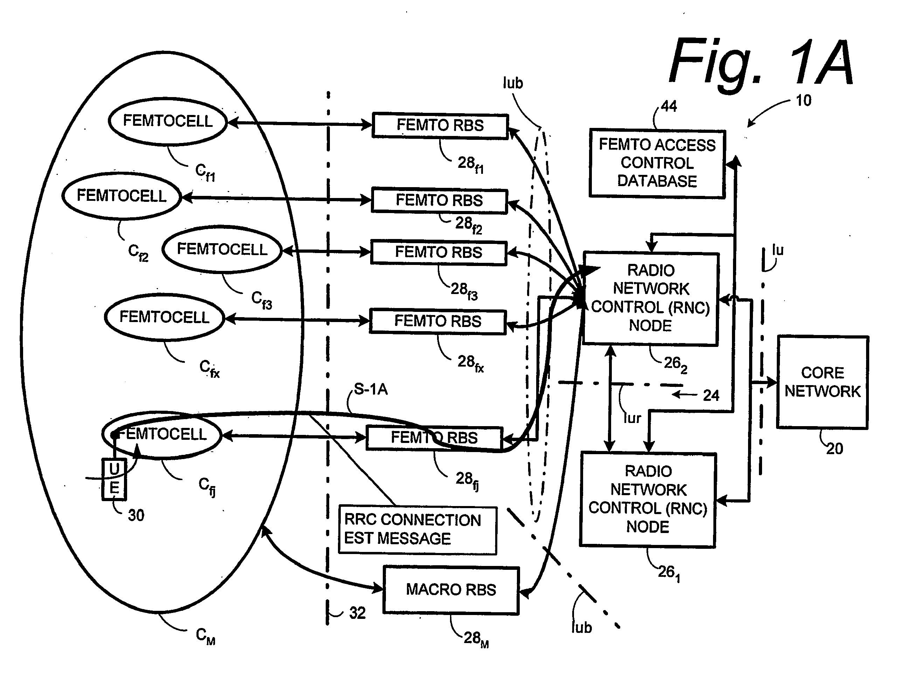

The present invention is described in the non-limiting, example context of a telecommunications system 10 shown in Fig. 1A. The telecommunications system 10 connects to a core network 20. The telecommunications system 10 comprises a radio access network 24. The radio access network 24 includes one or more radio network controller nodes (RNCs) 26 and radio base stations (BS) 28. For sake of example Fig. 1A particular shows two radio network control nodes, i.e., a first radio network control 26, and a second radio network control 26₂ as well as one or more macro radio base stations (only one macro radio base station 28_{M} being shown in Fig. 1A) and plural femto radio base stations 28_{f1}, 28_{f2}, ... 28_{fx}. The macro radio base station 28_{M} serves a macrocell C_{M}. The femto radio base stations 28_{f1}, 28_{f2},...28_{fx} serve respective femtocells C_{f1}, C_{f2},... C_{fx}. At least some of the femtocells C_{f1}, C_{f2}, ...C_{fx} are geographically overlayed or overlapped by the macrocell C_{M}.

As used herein, a "femto radio base station" also has the meaning of a pico radio base station or a micro radio base station, which serves a femto cell (or pico cell or micro cell). The femto cell is typically overlaid by one or more macro cells and serves a smaller geographic area or subscriber constituency than a macro cell. The technology described herein has particular benefit for a femto radio base station which can be installed and/or relocated within a radio access network without the installation or relocation being controlled by the owner/operator of the radio access network. In other words, a non-network operator entity (a femto operator) can acquire the femto radio base station and situate the femto radio base station in accordance with the preferences of the femto operator.

A user equipment unit (UE), such as user equipment unit (UE) 30 shown in Fig. 1A, communicates with one or more cells or one or more base stations (BS) 28 over a radio or air interface 32. The user equipment unit can be a mobile station such as a mobile telephone ("cellular" telephone) and laptop with mobile termination, and thus can be, for example, portable, pocket, hand-held, computer-included, or car-mounted mobile device which communicate voice and/or data with radio access network.

The radio access network 24 shown in Fig. 1A can be, by way of non-limiting example, a UMTS Terrestrial Radio Access Network (UTRAN). In the UTRAN, radio access is preferably based upon Wideband Code Division Multiple Access (WCDMA) with individual radio channels allocated using CDMA spreading codes. Of course, other access methods may be employed. The nodes 26 and 28 are respectively termed the radio network control node and the radio base station nodes in view of the UTRAN example. However, it should be understood that the term radio network control and radio base station also encompasses nodes having similar functionality for other types of radio access networks. Other types of telecommunications systems which encompass other types of radio access networks include the following: Global System for Mobile communications (GSM); Advance Mobile Phone Service (AMPS) system; the Narrowband AMPS system (NAMPS); the Total Access Communications System (TACS); the Personal Digital Cellular (PDC) system; the United States Digital Cellular (USDC) system; and the code division multiple access (CDMA) system described in EIA/TIA IS-95.

The radio access network 24 is connected to core network 20 over an interface, such as the Iu interface for UTRAN. The core network 20 of Fig. 1A can comprise, among other things a Mobile Switching Center (MSC) node, a Gateway MSC node (GMSC), a Gateway General Packet Radio Service (GPRS) support node (GGSN), and a Serving GPRS Support node (SGSN). Circuit switched (CS) network or packet switched (PS) network can be connected to core network 20.

For sake of simplicity, the radio access network 24 of Fig. 1A is shown with only two RNC nodes 26. Multiple radio network controller nodes (RNCs) may be provided, with each RNC 26 being connected to one or more base stations (BS) 28. It will be appreciated that a different number of base stations than that shown in Fig. 1A can be served by a radio network control 26, and that RNCs need not serve the same number of base stations. Moreover, an RNC can be connected over an Iur interface to one or more other RNCs in radio access network 24. The radio network controller node (RNC) 26 communicates over an interface Iub with the macro radio base station 28_{M}. Further, those skilled in the art will also appreciate that a base station such as the macro radio base station 28 is sometimes also referred to in the art as a radio base station, a node B, or B-node. Each of the radio interface 32, the Iu interface, the Iur interface, and the Iub interface are shown by dash-dotted lines in Fig. 1A.

Fig. 1A also shows by dash-dotted lines a Iub interface which exists between the femto radio base stations 28_{f} and the RNC node 26. The Iub interface is preferably formed by an internet protocol (IP) connection.

Fig. 1A also shows that the radio network controller nodes (RNCs) of radio access network 24 have access to access control database 44. The femto access control database 44 may be provided as a separate node of radio access network 24 as shown, or may be an adjunct of another RAN node (e.g., included in one or more radio network controller nodes (RNCs) 26). Alternatively, in certain cases, access to femto access control database 44 can even be provided through core network 20. In the particular radio access network 24 shown in Fig. 1A, Femto access control database 44 is shown as being connected to radio network control nodes, and particularly to first radio network controller node RNC 26₁ and second radio network controller node RNC 26₂.

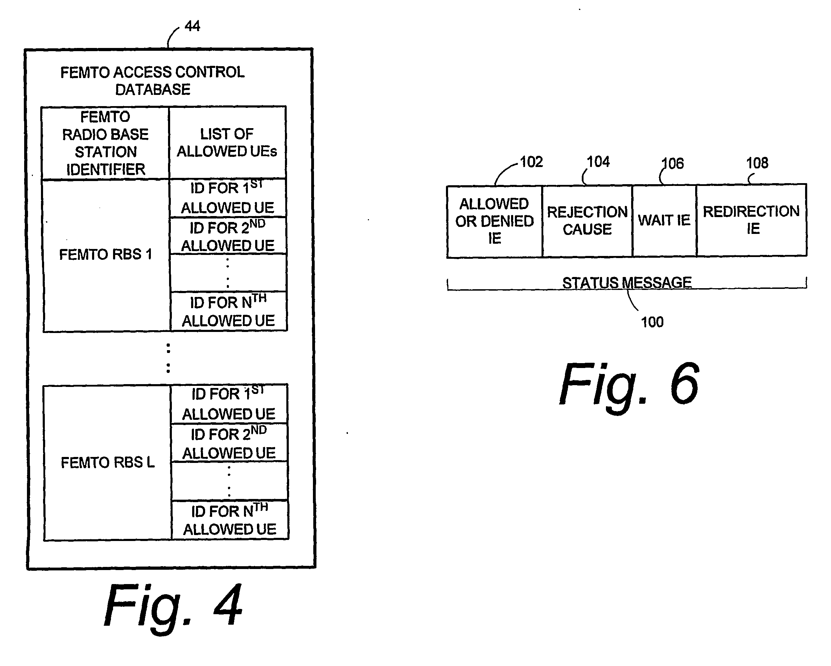

As shown by an example format depicted in Fig. 4, femto access control database 44 maintains or lists allowed user equipment units which are to be permitted access for use of a femto radio base station. As shown in Fig. 4, femto access control database 44 is formatted to list, for each of L number of femto radio base stations, identifications of the user equipment units which have allowed access status to the respective femto radio base station. An example such identification for a user equipment unit (UE) may be the International Mobile Subscriber Identity (IMSI) of the user equipment units. As explained hereinafter, femto access control database 44 is consulted and used to determine if a candidate user equipment unit attempting to use the femto radio base station for access to the radio access network is to be given access.

Fig. 1A can be viewed as illustrating generic access of femto radio base station 28_{fj} to the radio access network (RAN), e.g., to its radio network controller node (e.g., radio network controller node 26₁ in the specifically illustrated scenario). By "generic access" is meant that the access afforded to femto radio base station 28_{fj} can be either broadband fixed access or broadband wireless (mobile) access (e.g., WiMAX) as described above. In broadband wireless (mobile) access, access for femto radio base station 28_{fj} to the radio access network 24 is through a macro radio base station, and can occur using, e.g. High Speed Downlink Packet Access (HSDPA) and Enhanced Uplink; or WiMAX. To cater generically to the access types, in Fig. 1A the femto radio base stations 28_{f} including femto radio base stations 28_{fj} are connected to a communications network 38. An example of such communications network is an IP network 38. Unless otherwise specifically exempted in its context, aspects of the technology described herein are applicable to all types of access, including broadband fixed access and broadband mobile access (e.g., broadband wireless access).

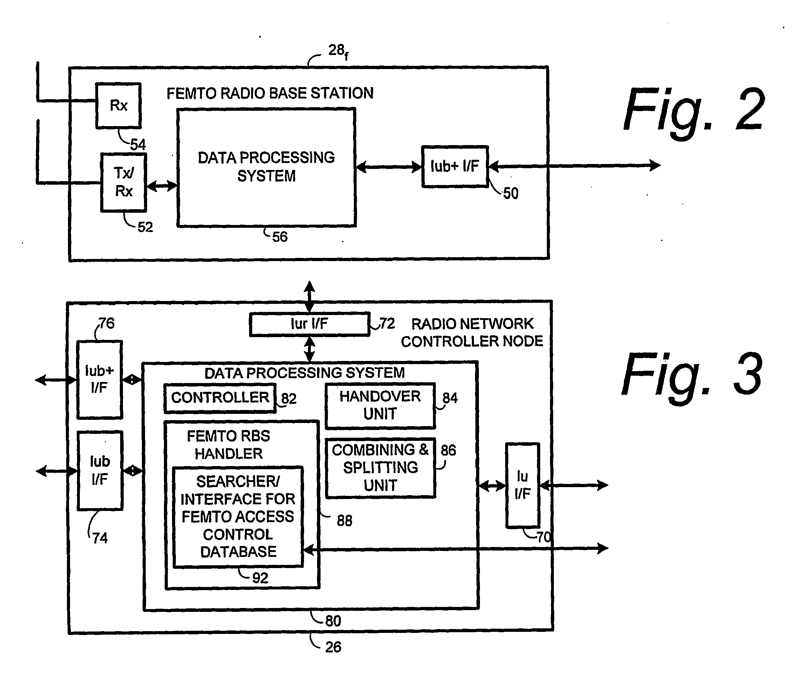

Fig. 2 illustrates basic, selected, representative constituent elements of an example generic femto radio base station 28_{f}. One or more of the femto radio base stations 28_{f1}, 28_{f2},...28_{fx} can take the form of the generic femto radio base station 28_{f} shown of Fig. 2. The femto radio base station 28_{f} of Fig. 2 is shown as including, among its other unillustrated constituent units, an interface unit 50 for connecting with radio network control node 26 over the Iub interface; one or more radio frequency transceivers 52; an optional UTRAN receiver 54; and, a data processing system, section, or unit 56.

The IP interface unit 50 is a normal Iub interface unit, but has connectivity to an IP network Thus, as explained hereinafter, connection between RNC 26 and the femto radio base stations 28_{f} preferably utilizes, e.g., Internet Protocol (IP)-based transmission.

The radio frequency transceivers 52 are for communicating over the radio or air interface with user equipment units (UEs) in the femtocell served by the femto radio base station 28_{f}. The number of radio frequency transceivers 52 depends on various factors including capacity of the femto radio base station to handle mobile connections.

Some femto radio base station nodes may further also comprise receiver 54 for receiving scanned cell information broadcast for one or more receivable cells of the radio access network. For example, in one example implementation the femto radio base station 28_{f} comprises or is equipped with a WCDMA receiver (a UE) as its radio frequency receiver 54, thereby enabling the femto radio base station to camp on signals from receivable cells (including both WCDMA macrocells and femtocells) and to read the relevant system or network information broadcast in those cells.

Fig. 3 illustrates basic, selected, representative constituent elements of an example radio network control node 26. The radio network control node 26 can comprise several interface units, such as an interface unit 70 for connecting radio network control node 26 over the Iu interface to core network 20; an interface unit 72 for connecting radio network control node 26 over the Iur interface to other (unillustrated) radio network controllers; one or more interface units 74 for connecting radio network control node 26 over the Iub interface to respective one or more macro radio base station 28_{M}; and, one or more interface units 76 for connecting radio network control node 26 over the Iub interface to respective one or more femto radio base stations 28_{f1}, 28_{f2},...28_{fx}. The connection between RNC 26 and the femto radio base stations 28ₘ preferably utilizes, e.g., Internet Protocol (IP)-based transmission. The connection between RNC 26 and the macro radio base station(s) 28_{M} can utilize, e.g., Internet Protocol (IP)-based and/or ATM-based transmission.

In addition to interface units, the radio network control node 26 comprises numerous unillustrated constituent units, as well as a data processing system, section, or unit 80. As shown in Fig. 3, in an example, non-limiting implementation the data processing system 80 of radio network control node 26 comprises a control section (e.g., controller 82); a handover unit 84; a combiner and splitter unit 86 (involved, e.g., in handling diversity legs of a connection); and, a femto radio base station handler 88. The femto radio base station handler 88 includes a searcher interface 92 for femto access control database 44.

At the time shown in Fig. 1A, user equipment unit (UE) 30 is seeking access to radio access network 24 via femto radio base station 28_{fj}. The femto radio base station 28_{fj} has been activated by a femto operator and has been connected to a correct radio network controller node (e.g., radio network controller 26₂). The femto radio base station 28_{fj} can become connected to is correct radio network controller node in various ways.

As explained previously, there may be economic exclusivities for femto radio base station 28_{fj}. That is, the owner/operator of femto radio base station 28_{fj} is jealous regarding which and/or how many user equipment units utilize femto radio base station 28_{fj} for access to radio access network 24. Such jealously may arise, for example, by the fact that the owner/operator of femto radio base station 28_{fj} is obligated to pay for the connections via femto radio base station 28_{fj} to the radio access network 24, or the fact that the owner/operator wants to ensure that the user equipment units associated with the owner/operator's community, enterprise, SOHO, or business or the like is guaranteed access to radio access network 24 via femto radio base station 28_{fj} with priority or exclusivity over other user equipment units which are not members of the owner/operators's community, etc.

Fig. 1A shows, as event or step S-1A, the user equipment unit (UE) 30 (also known herein as a "candidate" user equipment unit) attempting to use femto radio base station 28_{fj} for access to radio access network 24. One example way for the candidate user equipment unit 30 to attempt to use femto radio base station 28_{fj} for access to radio access network 24 is by candidate user equipment unit 30 attempting to establish a radio resource control (RRC) connection (RRC connection establishment) with radio access network 24 through femto radio base station 28_{fj}. Thus, as event or step S-1A, candidate user equipment unit 30 sends a RRC connection establishment message to radio network controller node 26₂ via femto radio base station 28_{fj}. The RRC connection establishment message of step S-1A includes identification information regarding the candidate user equipment unit 30, e.g., the IMSI of candidate user equipment unit 30. The femto radio base station 28_{fj} relays the RRC connection establishment message of step S-1A over the Iub interface to radio network controller 26₂.

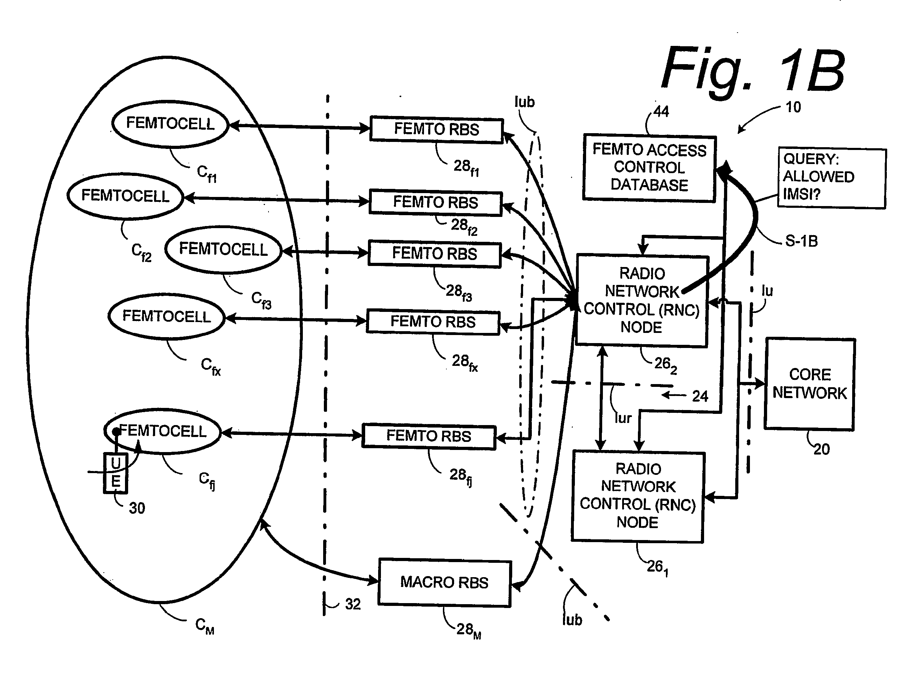

Upon reception of the RRC connection establishment message of step S-1A, the request for access inherent in the RRC connection establishment message of step S-1A is processed by radio network controller node 26₂, and particularly by femto radio base station handler 88. The femto radio base station handler 88 directs searcher interface 92 to prepare a query of femto access control database 44 so that radio network controller node 26₂ can ascertain whether candidate user equipment unit 30 is permitted access to radio access network 24 via femto radio base station 28_{fj}. To this end, Fig. 1B shows radio network controller node 26₂ sending a query to femto access control database 44 to find out whether the candidate user equipment unit 30 is a permitted user/subscriber/customer of femto radio base station 28_{fj}. The query to femto access control database 44 includes both the identifier of the candidate user equipment unit 30 and an identifier of the femto radio base station 28_{fj} for which permission is sought.

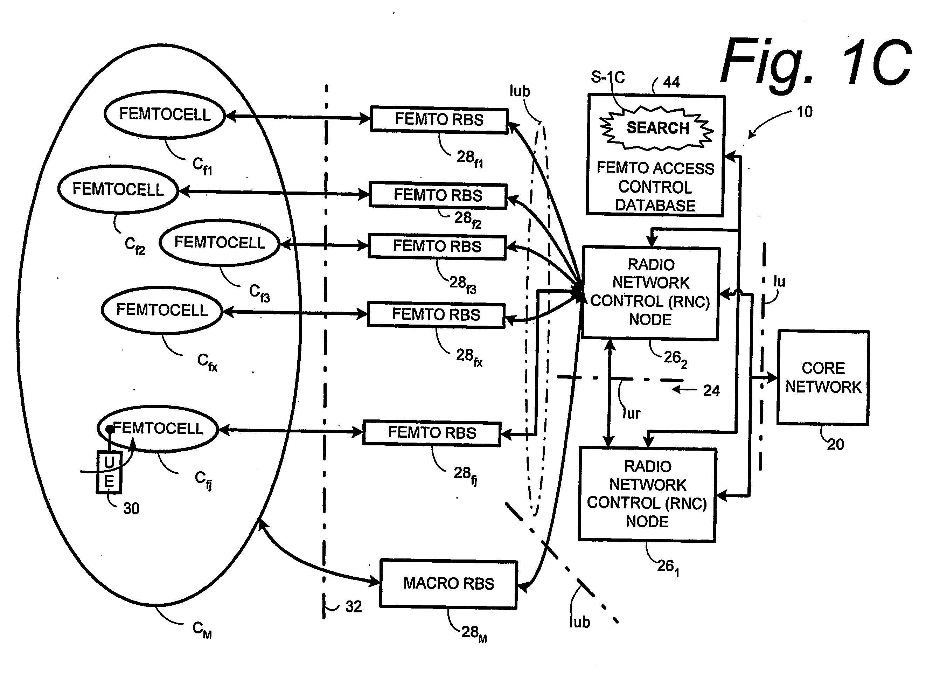

Fig. 1C depicts, as step or event S-1C, the femto access control database 44 receiving the query from radio network controller node 26₂ and performing a search to determine if the identifier (IMSI) of the candidate user equipment unit 30 is listed as an allowed identifier for the particular femto radio base station identified in the query message, i.e., femto radio base station 28_{fj}. As shown in Fig. 4, in one example configuration of femto access control database 44, for each femto radio base station encompassed by femto access control database 44 there is a list of permitted or allowed user equipment units, the list preferably being formatted in terms of user equipment unit identifier such as IMSI, for example.

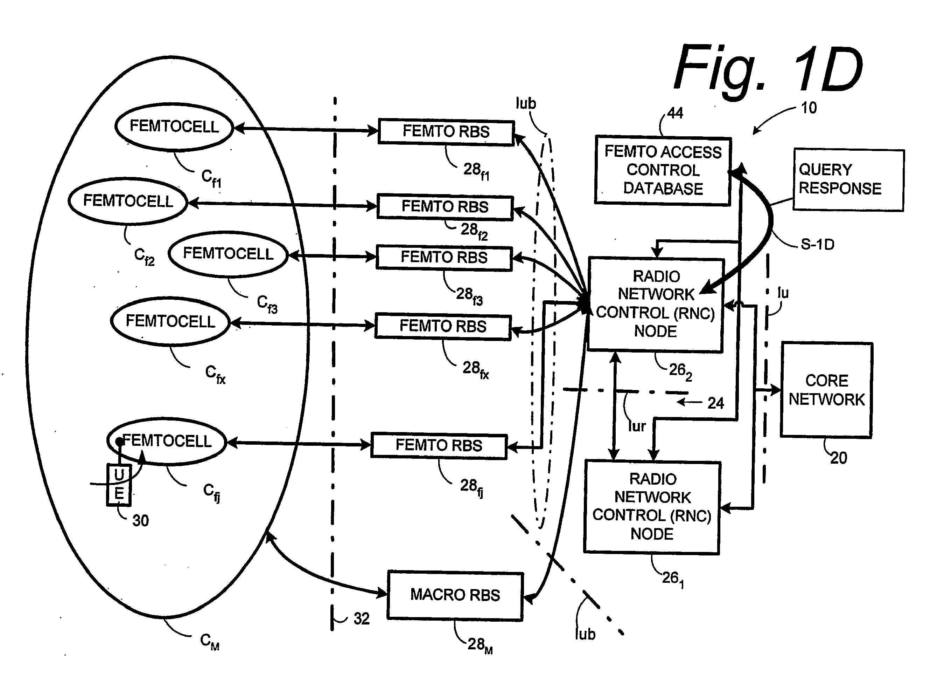

Fig. 1D also depicts femto access control database 44 returning a response radio network controller node 26₂ after femto access control database 44 has conducted its search. In its most simple implementation, the response message (depicted as step or event S-1D in Fig. 1D) advises merely whether candidate user equipment unit 30 is allowed or not to use femto radio base station 28_{fj} for RAN access.

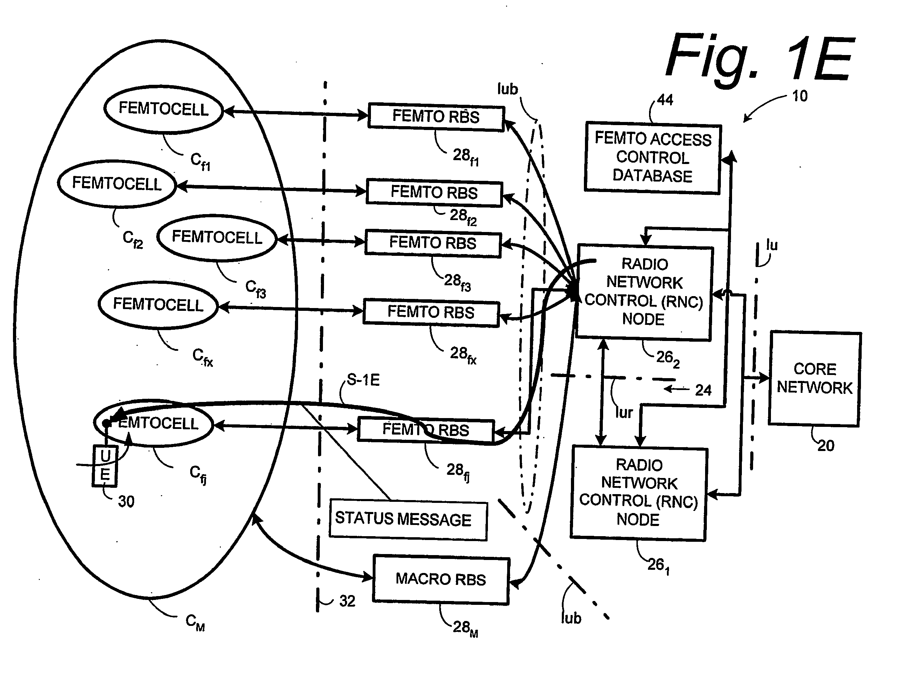

Thus, when candidate user equipment unit 30 establishes a RRC connection via femto radio base station 28_{fj}, the radio network controller node (radio network controller node 26₂ in the illustrated scenario) checks femto access control database 44 to determine whether an allowed IMSI for this femto radio base station 28_{fj} is attempting to establish the connection. If the femto access control database 44 indicates in step S-1D that candidate user equipment unit 30 is allowed to access radio access network 24 using femto radio base station 28_{fj}, the RRC connection establishment is approved by the radio network controller node (e.g., radio network controller node 26₂). Fig. 1E depicts, as step or event S-1E, the radio network controller node 26₂ sending a status message to candidate user equipment unit 30. In the case that candidate user equipment unit 30 is a permitted or allowed user equipment unit for femto radio base station 28_{fj}, the status message takes the form of an approval message. In the case that candidate user equipment unit 30 is not a permitted or allowed user equipment unit for femto radio base station 28_{fj}, the status message takes the form of a denial message.

In its simplest form, the denial message of step S-1E can include a curt notification that the candidate user equipment unit 30 is denied use of femto radio base station 28_{fj}. In other forms, the denial message of step S-1E can include information whereby the candidate user equipment unit is redirected to another frequency, or to another cell, or to another radio access technology network. In yet another form, the denial message of step S-1E can require candidate user equipment unit 30 to wait for a specified wait time before again attempting to use femto radio base station 28_{fj} for access to radio access network 24.

Thus, if candidate user equipment unit 30 is not allowed to access radio access network 24 using femto radio base station 28_{fj}, the RNC (e.g., radio network controller node 26₂) rejects the RRC connection establishment. The RNC can indicate different actions for the mobile station in the event of a denial. These are all based on existing mechanisms in the RRC protocol.

As shown in Fig. 6, an example status message 100 may include several fields of information elements (IEs) which indicates the different action to be taken by candidate user equipment unit 30 in view of the denial. Foremost among the fields or information elements (IE) is information element (IE) 102 which specifies whether the candidate user equipment unit 30 is allowed or denied. Such fields or information element(s) (IEs) may include one or more of the following: a "Rejection Cause IE" 104; a "Wait IE" 106, and/or a "Redirection IE" 108, for example. Thus, as indicated above, in its denial message the RNC may:
- Indicate congestion as the Rejection Cause IE 104 and/or wait time IE 106 until candidate user equipment unit 30 is again allowed to access the cell of the femto radio base station 28_{fj}. The wait time can be also set to `infinite' meaning that candidate user equipment unit 30 is not allowed to retry establishment of the RRC connection via femto radio base station 28_{fj} for this transaction.
- Indicate another frequency in the Redirection Info IE 108. In such case, candidate user equipment unit 30 should find a suitable cell on the indicated frequency and camp on such indicated cell. This indicated frequency would preferably be a frequency used for the macro WCDMA coverage.
- Indicate Inter-Radio Access Technology (Inter-RAT) cell information in the Redirection Info IE 108. In such case, the candidate user equipment unit 30 should find a suitable cell of another radio access technology (e.g., a GSM cell of a GSM radio access network if current radio access technology is UTRAN), and camp on the alternate RAT cell.

The information to include in the information element(s) such as "Rejection Cause IE" 104, "Wait IE" 106, and "Redirection IE" 108 may be gleaned from other databases or resources access from or maintained the radio network controller node itself, or alternatively by radio access network or, in some cases, the core network. In the event that the candidate user equipment unit 30 is not approved but nevertheless instructed to "wait", it is expected that, at least in some instances, the owner/operator of femto radio base station 28_{fj} has some input or discretion in determining whether a guest candidate user equipment unit will be permitted subsequently to use femto radio base station 28_{fj} should congestion eventually dissipate or decrease. To this end, femto access control database 44 may include an additional optional field of information to give guest privileges to an otherwise non-allowed candidate user equipment unit 30 when traffic conditions so permit. In other words, a user equipment unit which is configured in the femto access control database 44 as a guest may be allowed optional access to femto cell C_{fj}, but only when traffic conditions so permit (e.g., low congestion).

Information such as the information included in the status message of step S-1E and Fig. 6 can additionally and optionally be provided to the femto radio base station 28_{fj}, or any other network node (macro or pico) having a need or desire or advantage for knowing the outcome of the access request. Such information to other nodes may be beneficial, for example, in architectures in which the other node (e.g., a radio base station node) currently has, or may in the future have, capabilities of handling access control, either totally or partially.

The femto access control database 44 can be pre-configured and/or dynamically configured with identities of allowed user equipment units which are to be permitted access for use of the femto radio base station. In this regard, the femto radio base station 28_{fj} is identified in the RNC and in femto access control database 44 with an identifier such as (for example) a serial number or the like. The association between serial number and mobile subscriber identity (e.g., IMSI) is initially done, e.g. at a store or other release point at which the pico-base station is purchased or acquired by the pico/femto owner/operator. Furthermore, it is also possible for the femto/pico owner/operator of femto radio base station 28_{fj} to define which mobile subscribers (e.g., which user equipment units (UEs) are able to access femto radio base station 28_{fj}. Such control of access (be it either remote, subsequent, and/or dynamic) can be achieved, e.g., using a web-based service, where the owner of the base station is first authorized and is then able to define the allowed or permitted mobile subscribers. The mobile subscribers are preferably identified using MSISDN number and then the service can map these values to the IMSI values of the user equipment units for use by the femto access control database 44.

Thus, the technology enables a femto RBS to be genuinely dedicated to a set of users. Such dedication and exclusivity is especially important if, for example, the end users' own broadband connection is used for transmission between base station and RNC or if the end user has paid for a certain WCDMA air capacity in the femto RBS.

Thus, as one aspect of the technology, an access control database is configured for facilitating (e.g., making or assisting in the making of) a determination whether a candidate user equipment unit attempting to use a femto radio base station for access to a radio access network is to be given access to the radio access network through the femto radio base station. The access control database can be situated as a stand alone node of the radio access network or situated at a radio network controller node of the radio access network.

The foregoing principle/method can also be applied for radio technologies other than WCDMA, which is illustrated only as an example. Other suitable technologies include but are not limited to GSM, CDMA, WiMAX etc. The technology has particular relevance of the aforementioned and conveniently described system and scenarios, but could also be applied in other cases and for other networks.

Although various embodiments have been shown and described in detail, the claims are not limited to any particular embodiment or example. None of the above description should be read as implying that any particular element, step, range, or function is essential.

## Claims

1. A method of operating a radio access network (24) comprising:
maintaining a database (44) of allowed user equipment units which are to be permitted access for use of a femto radio base station (28_{f});
using the database (44) to facilitate a determination if a candidate user equipment unit (30) attempting to use the femto radio base station (28_{f}) for access to the radio access network (24) is an allowed candidate user equipment unit (30); and **characterised by**
allowing access for a non-allowed candidate user equipment unit to use the femto radio base station (28_{f}) as a guest if traffic conditions so permit.

2. The method of claim 1, wherein the candidate user equipment unit (30) attempting to use the femto radio base station (28_{f}) for access to the radio access network (24) comprises the candidate user equipment unit (30) attempting to establish a radio connection with the radio access network (24) through the femto radio base station (28_{f}).

3. The method of claim 1, further comprising permitting the candidate user equipment (30) to use the femto radio base station (28_{f}) as a guest during low congestion.

4. The method of claim 1, further comprising, if the candidate user equipment unit (30) is not an allowed user equipment unit as determined by the database (44), redirecting the candidate user equipment unit (30) to another frequency, or another Inter-Radio Access Technology cell.

5. The method of claim 1, further comprising, if the candidate user equipment unit (30) is not an allowed user equipment unit as determined by the database (44), requiring the candidate user equipment unit (30) to wait for a specified wait time before again attempting to use the femto radio base station (28_{f}) for access to the radio access network.

6. The method of claim 1, further comprising configuring the access control database (44) with identities of allowed user equipment units which are to be permitted access for use of the femto radio base station (28_{f}).

7. The method of claim 1, further comprising sending a status message to a node of the radio access network (24) for providing information regarding the determination.

8. A radio access network (24) node comprising an access control database (44) configured for facilitating a determination whether a candidate user equipment unit (30) attempting to use a femto radio base station (28_{f}) for access to a radio access network (24) is to be given access as an allowed candidate user equipment unit (30) to the radio access network (24) through the femto radio base station (28_{f}) **characterised by** the access control database (44) is further configured to allow access for a non-allowed candidate user equipment unit to use the femto radio base station (28_{f}) as a guest if traffic conditions so permit.

9. The radio access network node of claim 8, wherein the access control database (44) is situated as a stand alone node of the radio access network.

10. The radio access network node of claim 8, wherein the access control database (44) is situated at a radio network controller node (26) of the radio access network (24).

11. A radio access network (24) comprising:
a femto radio base station (28_{f}) for serving a femto cell of the radio access network (24);
at least one radio network controller node (26), the at least one radio network controller node (26) configured for controlling a connection between a user equipment unit and the radio access network (24) using resources of the femto radio base station (28_{f});
a radio access network (24) node according to Claim 8.

12. The radio access network (24) of claim 9, wherein the radio access network (24) node is configured for facilitating a determination about a candidate user equipment unit (30) in response to interrogation by the radio network controller node (26).

## Patentansprüche

1. Verfahren zum Betreiben eines Funkzugangsnetzes (24), umfassend:
Führen einer Datenbank (44) von zugelassenen Benutzereinrichtungseinheiten, welchen Zugang zur Verwendung einer Femto-Funkbasisstation (28_{f}) erlaubt werden soll;
Verwenden der Datenbank (44), um eine Bestimmung zu ermöglichen, ob eine Kandidaten-Benutzereinrichtungseinheit (30), die versucht, die Femto-Funkbasisstation (28_{f}) für Zugang zum Funkzugangsnetz (24) zu verwenden, eine zugelassene Kandidaten-Benutzereinrichtungseinheit (30) ist; **gekennzeichnet durch**:
Gewähren von Zugang für eine nicht zugelassene Kandidaten-Benutzereinrichtungseinheit, um die Femto-Funkbasisstation (28_{f}) als Gast zu verwenden, wenn die Verkehrsbedingungen es erlauben.

2. Verfahren nach Anspruch 1, wobei der Versuch der Kandidaten-Benutzereinrichtungseinheit (30), die Femto-Funkbasisstation (28_{f}) für Zugang zum Funkzugangsnetz (24) zu verwenden, umfasst, dass die Kandidaten-Benutzereinrichtungseinheit (30) versucht, eine Funkverbindung mit dem Funkzugangsnetz (24) durch die Femto-Funkbasisstation (28_{f}) herzustellen.

3. Verfahren nach Anspruch 1, ferner umfassend, dass der Kandidaten-Benutzereinrichtungseinheit (30) während geringer Überlast erlaubt wird, die Femto-Funkbasisstation (28_{f}) als Gast zu verwenden.

4. Verfahren nach Anspruch 1, ferner umfassend, wenn die Kandidaten-Benutzereinrichtungseinheit (30) keine zugelassene Benutzereinrichtungseinheit ist, wie durch die Datenbank (44) bestimmt, ein Umschalten der Kandidaten-Benutzereinrichtungseinheit (30) auf eine andere Frequenz oder eine andere Interfunkzugangstechnologie-Zelle.

5. Verfahren nach Anspruch 1, ferner umfassend, wenn die Kandidaten-Benutzereinrichtungseinheit (30) keine zugelassene Benutzereinrichtungseinheit ist, wie durch die Datenbank (44) bestimmt, ein Auffordern der Kandidaten-Benutzereinrichtungseinheit (30), vor einem erneuten Versuch, die Femto-Funkbasisstation (28_{f}) für Zugang zum Funkzugangsnetz zu verwenden, eine spezifizierte Wartezeit abzuwarten.

6. Verfahren nach Anspruch 1, ferner umfassend ein Konfigurieren der Zugangskontrolldatenbank (44) mit Kennungen von zugelassenen Benutzereinrichtungseinheiten, welchen Zugang zur Verwendung der Femto-Funkbasisstation (28_{f}) erlaubt werden soll.

7. Verfahren nach Anspruch 1, ferner umfassend ein Senden einer Statusnachricht an einen Knoten des Funkzugangsnetzes (24) zum Bereitstellen von Informationen in Bezug auf die Bestimmung.

8. Funkzugangsnetz (24)-Knoten, umfassend eine Zugangskontrolldatenbank (44), die so konfiguriert ist, dass sie eine Bestimmung ermöglicht, ob einer Kandidaten-Benutzereinrichtungseinheit (30), die versucht, eine Femto-Funkbasisstation (28_{f}) für Zugang zum Funkzugangsnetz (24) zu verwenden, als einer zugelassenen Kandidaten-Benutzereinrichtungseinheit (30) Zugang zum Funkzugangsnetz (24) durch die Femto-Funkbasisstation (28_{f}) gestattet werden soll, **dadurch gekennzeichnet, dass** die Zugangskontrolldatenbank (44) ferner so konfiguriert ist, dass sie einer nicht zugelassenen Benutzereinrichtungseinheit als Gast Zugang zum Verwenden der Femto-Funkbasisstation (28_{f}) gewährt, wenn die Verkehrsbedingungen es erlauben.

9. Funkzugangsnetzknoten nach Anspruch 8, wobei die Zugangskontrolldatenbank (44) als ein unabhängiger Knoten des Funkzugangsnetzes angeordnet ist.

10. Funkzugangsnetzknoten nach Anspruch 8, wobei die Zugangskontrolldatenbank (44) an einem Funknetzsteuerknoten (26) des Funkzugangsnetzes angeordnet ist.

11. Funkzugangsnetz (24), umfassend:
eine Femto-Funkbasisstation (28f) zum Versorgen einer Femto-Zelle des Funkzugangsnetzes (24);
mindestens einen Funknetzsteuerknoten (26), wobei der mindestens eine Funknetzsteuerknoten (26) so konfiguriert ist, dass er eine Verbindung zwischen einer Benutzereinrichtungseinheit und dem Funkzugangsnetz (24) unter Verwendung von Betriebsmitteln der Femto-Funkbasisstation (28f) steuert;
einen Funkzugangsnetz (24)-Knoten nach Anspruch 8.

12. Funkzugangsnetz (24) nach Anspruch 9, wobei der Funkzugangsnetz (24)-Knoten so konfiguriert ist, dass er eine Bestimmung über eine Kandidaten-Benutzereinrichtungseinheit (30) als Antwort auf eine Abfrage durch den Funknetzsteuerknoten (26) ermöglicht.

## Revendications

1. Procédé d'exploitation d'un réseau d'accès radio (24) comprenant :
le maintien d'une base de données (44) d'unités d'équipement d'utilisateur autorisées qui auront l'autorisation d'accéder à une station de base radio femto (28_{f}) pour l'utiliser ;
l'utilisation de la base de données (44) pour faciliter le fait de déterminer si une unité d'équipement d'utilisateur candidat (30) essayant d'utiliser la station de base radio femto (28_{f}) pour accéder au réseau d'accès radio (24) est une unité d'équipement d'utilisateur candidat (30) autorisée ; et **caractérisé par**
l'autorisation à une unité d'équipement d'utilisateur candidat non autorisée d'accéder à la station de base radio femto (28_{f}) de l'utiliser en tant qu'hôte si les conditions de trafic le permettent.

2. Procédé selon la revendication 1, dans lequel l'unité d'équipement d'utilisateur candidat (30) essayant d'utiliser la station de base radio femto (28_{f}) pour accéder au réseau d'accès radio (24) comprend l'essai par l'unité d'équipement d'utilisateur candidat (30) d'établir une connexion radio avec le réseau d'accès radio (24) par le biais de la station de base radio femto (28_{f}).

3. Procédé selon la revendication 1, comprenant en outre l'autorisation à l'unité d'équipement d'utilisateur candidat (30) d'utiliser la station de base radio femto (28_{f}) en tant qu'hôte pendant une faible congestion.

4. Procédé selon la revendication 1, comprenant en outre, si l'unité d'équipement d'utilisateur candidat (30) n'est pas une unité d'équipement d'utilisateur autorisée telle que déterminée par la base de données (44), la redirection de l'unité d'équipement d'utilisateur candidat (30) sur une autre fréquence, ou une autre cellule d'intertechnologie d'accès radio.

5. Procédé selon la revendication 1, comprenant en outre, si l'unité d'équipement d'utilisateur candidat (30) n'est pas une unité d'équipement d'utilisateur autorisée telle que déterminée par la base de données (44), la nécessité pour l'unité d'équipement d'utilisateur candidat (30) de patienter pendant un temps d'attente spécifié avant de réessayer d'utiliser la station de base radio femto (28_{f}) pour accéder au réseau d'accès radio.

6. Procédé selon la revendication 1, comprenant en outre la configuration de la base de données de contrôle d'accès (44) avec des identités d'unités d'équipement d'utilisateur autorisées qui auront l'autorisation d'accéder à la station de base radio femto (28_{f}) pour l'utiliser.

7. Procédé selon la revendication 1, comprenant en outre l'envoi d' un message de statut à un noeud du réseau d'accès radio (24) pour fournir des informations concernant la détermination.

8. Noeud de réseau d'accès radio (24) comprenant une base de données de contrôle d'accès (44) configurée pour faciliter le fait de déterminer si une unité d'équipement d'utilisateur candidat (30) essayant d'utiliser une station de base radio femto (28_{f}) pour accéder à un réseau d'accès radio (24) se verra ou non accorder l'accès en tant qu'unité d'équipement d'utilisateur candidat (30) autorisée au réseau d'accès radio (24) par le biais de la station de base radio femto (28_{f}), **caractérisé par le fait que** la base de données de contrôle d'accès (44) est en outre configurée pour autoriser une unité d'équipement d'utilisateur candidat non autorisée à accéder à la station de base radio femto (28_{f}) de l'utiliser en tant qu'hôte si les conditions de trafic le permettent.

9. Noeud de réseau d'accès radio selon la revendication 8, dans lequel la base de données de contrôle d'accès (44) est établie en tant que noeud autonome du réseau d'accès radio.

10. Noeud de réseau d'accès radio selon la revendication 8, dans lequel la base de données de contrôle d'accès (44) est établie au niveau d'un noeud de contrôleur de réseau radio (26) du réseau d'accès radio (24).

11. Réseau d'accès radio (24) comprenant :
une station de base radio femto (28_{f}) pour desservir une femtocellule du réseau d'accès radio (24) ;
au moins un noeud de contrôleur de réseau radio (26), l'au moins un noeud de contrôleur de réseau radio (26) étant configuré pour contrôler une connexion entre une unité d'équipement d'utilisateur et le réseau d'accès radio (24) en utilisant les ressources de la station de base radio femto (28_{f});
un noeud de réseau d'accès radio (24) selon la revendication 8.

12. Réseau d'accès radio (24) selon la revendication 9, dans lequel le noeud de réseau d'accès radio (24) est configuré pour faciliter une détermination concernant une unité d'équipement d'utilisateur candidat (30) en réponse à une interrogation par le noeud de contrôleur de réseau radio (26).
